# EUROPÄISCHE PATENTSCHRIFT

(11) **EP 0 993 664 B1**
(45) Veröffentlichungstag und Bekanntmachung des Hinweises auf die Patenterteilung: **17.03.2004**
(21) Anmeldenummer: 98928045.8
(22) Anmeldetag: 29.06.1998
(51) Int. Cl.: G07F 7/10, G07F 7/08

(54) **TRANSAKTIONSVERFAHREN MIT EINEM MOBILGERÄT**
TRANSACTION METHOD CARRIED OUT WITH A MOBILE APPARATUS
PROCEDE DE TRANSACTION MIS EN OEUVRE AU MOYEN D'UN APPAREIL MOBILE

(30) Priorität: 27.06.1997 CH 156497; 05.03.1998 WO PCT/CH98/00086
(43) Veröffentlichungstag der Anmeldung: 19.04.2000
(73) Patentinhaber: Swisscom Mobile AG, 3050 Bern (CH)
(72) Erfinder: RITTER, Rudolf, CH-3052 Zollikofen (CH); BOUQUET, Hanspeter, CH-3032 Hinterkappelen (CH); HEUTSCHI, Walter, CH-3303 Jegensdorf (CH)
(74) Vertreter: BOVARD AG - Patentanwälte
(86) Internationale Anmeldenummer: PCT/CH1998/000282
(87) Internationale Veröffentlichungsnummer: WO 1999/000773

(56) Entgegenhaltungen:
- EP-A- 0 708 547
- WO-A-96/13814
- WO-A-96/18981
- WO-A-97/14124
- WO-A-97/18653
- WO-A-97/45814
- WO-A-97/46986

## Beschreibung

Die vorliegende Erfindung betrifft ein Verfahren und ein System zur Übermittlung von Aufträgen in einem Telekommunikationsnetz. Die Erfindung betrifft insbesondere, aber nicht ausschliesslich, die Übermittlung von Aufträgen in einem Mobilfunknetz.

Gemäss dem bisherigen Stand der Technik werden Transaktionen zwischen einem Kunden (oder Client, C) und einem Terminal [Point-of-Transaktion (POT)], zum Beispiel einem Point-of-Sale (POS), oft mit einer elektronischen Zahlungskarte ausgeführt. Debit- und Kreditkarten werden zum Beispiel an Kassen in Geschäften, bei Tankstellen, usw. verwendet. Die Karte umfasst meistens Speichermittel, zum Beispiel einen Magnetstreifen und/oder ein Chip, in welchem unter anderem die Identifizierung des Kunden gespeichert ist. Um eine Transaktion mit dem Besitzer oder Betreiber eines Terminals zu tätigen, zum Beispiel um einen Artikel in einem Geschäft zu bezahlen, muss der Kunde seine Karte in einen geeigneten Kartenleser im Terminal einschieben. Der Terminal liest dann die Identifizierung des Kunden in der Karte, ermittelt und zeigt den zu bezahlenden Betrag an, prüft gegebenenfalls die Solvenz des Kunden und fordert vom Kunden, dass er die Transaktion mit einer Bestätigungstaste auf dem Terminal bestätigt. Wenn der Kunde solvent ist und seine Bestätigung eingegeben hat, werden die Kundenidentifizierung, der zu bezahlende Betrag und evtl. auch eine Terminal-Identifizierung an einen durch ein Telekommunikationsnetz mit dem Terminal verbundenen Finanzserver übermittelt, der von einem Finanzinstitut verwaltet wird. Entsprechend wird sofort oder später das Konto des Kunden bei diesem Finanzinstitut belastet.

Nachteilig in diesem Verfahren ist die Notwendigkeit, die Karte des Kunden in ein fremdes Gerät einschieben zu müssen. Die Kunden haben normalerweise ihre Karte nicht zur Hand, dafür zum Beispiel im Portemonnaie; eine sehr schnelle Transaktion ist also nicht möglich. Gelegentlich ist auch die Öffnung zum Einführen der Karte in das Lesegerät des Terminals nicht leicht zugänglich; dies ist besonders dann der Fall, wenn der Terminal ein Ticketautomat für Parkhäuser oder ein Zahlungsautomat ist, der vom Automobilisten ohne Aussteigen aus dem Wagen bedient werden soll. Ausserdem können betrügerische Handlungen oder nicht berechtigte Lesungen von Speicherbereichen der Karte im Terminal durchgeführt werden.

Sogar wenn heutzutage gewisse Chipkarten einen Mikroprozessor enthalten, sind diese Debit- und Kreditkarten im Wesentlichen passive Elemente, die Daten speichern, die im Wesentlichen von der Elektronik des Terminals gespeichert und benützt werden. Der Kunde dagegen hat normalerweise keine Möglichkeit, direkt auf die Daten Zugriff zu nehmen, ohne sich an einen Schalter oder an einen Automaten des betreffenden Finanzinstituts, das die Karte herausgibt, zu begeben. Für den Kunden ist es also schwierig, die mit der Karte durchgeführten Transaktionen zu kontrollieren oder darüber Buch zu führen.

Diese Karten enthalten eine Kundenidentifizierung, die es indes nur erlaubt, die Kunden beim herausgebenden Finanzinstitut identifizieren zu lassen. Eine Karte kann also normalerweise nur für eine finanzielle Transaktion benutzt werden, wenn der Kunde und der Terminal-Betreiber beim gleichen Finanzinstitut affiliert sind. Dagegen ist der Gebrauch der Karte für andere Arten von Transaktionen - zum Beispiel für nicht finanzielle Transaktionen, für die aber die zuverlässige Identifizierung des Kunden/Kartenbesitzers benötigt wird - nicht vorgesehen. Für den Kunden ist es also unumgänglich, eine grosse Anzahl von Karten, für jegliche Arten von finanziellen oder nicht finanziellen Transaktionen zu besitzen, zum Beispiel mehrere Debit- oder Kreditkarten, die von verschiedenen Finanzinstituten oder Ladenketten verwaltet werden, oder Abonnementskarten oder Zugangskarten für geschützte Zonen. Diese Karten sind meistens durch verschiedene Pin-Codes geschützt, die sich der Kunde mühsam einprägen muss.

Im Falle eines Diebstahles oder einer betrügerischen Handlung mit der Karte, muss diese gesperrt werden. Die Sperrung kann jedoch erst erfolgen, wenn die Karte in ein entsprechendes Gerät eingeführt wird. Die gewöhnlichen Kreditkarten können jedoch weiterhin in manuell bedienten Apparaten gebraucht werden; eine sichere Sperrung der Karte ist also nicht möglich.

Ausser Debit- und Kreditkarten kennt man die sogenannten e-cash-Karten (Wertkarten), welche es ermöglichen, Geldbeträge elektronisch zu speichern, welche anschliessend an verschiedenen Terminals als Zahlungsmittel akzeptiert werden. Um diese Karten erneut mit Geldbeträgen versehen zu lassen, muss der Kunde am Schalter oder Automaten eines Finanzinstitutes vorstellig werden, was auch nicht immer möglich ist.

Das Patentdokument WO 97/14124 beschreibt ein System, welches das elektronische Bestellen und Bezahlen von Dienstleistungen über ein Kommunikationsnetz, beispielsweise das öffentliche geschaltete Telefonnetz (Public Switched Telephone Network, PSTN) oder ein GSM-Mobilnetz (Global System for Mobile Communication) ermöglicht Im System gemäss WO 97/14124 kann ein Benutzer mittels einem Kommunikationsendgerät, beispielsweise ein herkömmliches Telefon oder ein Mobilfunktelefon, und mittels Wählimpulsen über ein System mit gesprochener Menuführung Dienste von einer Diensteinheit anfordern. Zur Bezahlung dieser Dienste wird eine "Smart Card" verwendet, welche über eine Schnittstelle mit dem Kommunikationsendgerät gekoppelt wird und über eine Verbindung dieses Kommunikationsendgeräts mit einer Transaktionseinheit Zahlungsinformationen an diese Transaktionseinheit übermittelt, wobei ein auf der Karte gespeicherter vorausbezahlter Betrag reduziert wird, der gemäss WO 97/14124 auch nachgeladen werden kann. Die "Smart Card" kann auch nur eine Benutzeridentifizierung umfassen, so dass in der Folge bei einer Bezahlung ein Konto des betreffenden Benutzers belastet wird.

Das Patentdokument WO 97/18653 beschreibt ein System mit mobilen Terminals, über welche ein Benutzer mit einer "Smart Card", die eine Benutzeridentifizierung und einen Geldbetrag speichert, Finanzinformationen abrufen und Finanztransaktionen ausführen kann, wobei die mobilen Terminal über ein Mobiltelefonnetz mit einem Finanzinstitut verbunden sind.

In der Patentschrift WO 96/13814 wird ein Echtzeitzahlungssystem beschrieben, in welchem Kunden einer Bank mit ihren Mobilfunktelefonen Finanzinformationen abfragen und Rechnungen bezahlen können, indem sie Konto- und Zahlungsinformationen mittels SMS-Meldungen oder über eine Telefonverbindung mit einer Rechnungsstation einer Bank austauschen.

Im Patentdokument WO 96/18981 wird ein Verfahren beschrieben, in welchem biophysikalische Merkmale eines Teilnehmers für dessen Identifizierung bei der Ausführung von Finanz-Clearing-Funktionen verwendet werden.

Eine Aufgabe der vorliegenden Erfindung ist es, ein neues Verfahren oder System vorzuschlagen, das erlaubt, die oben genannten Probleme zu vermeiden.

Eine weitere Aufgabe der vorliegenden Erfindung ist es, ein Transaktionsverfahren vorzuschlagen, das sowohl für finanzielle als auch für nicht finanzielle Transaktionen geeignet ist, und das einfacher und zuverlässiger ist, als die gewöhnlichen Transaktionsverfahren.

Gemäss der vorliegenden Erfindung werden diese Ziele insbesondere durch die Elemente des kennzeichnenden Teils der unabhängigen Ansprüche erreicht. Weitere vorteilhafte Ausführungsformen gehen ausserdem aus den abhängigen Ansprüchen und der Beschreibung hervor.

Insbesondere werden diese Ziele durch ein Transaktionsverfahren zwischen einem Kunden und einem mit einem Telekommunikationsnetz verbundenen Terminal (zum Beispiel ein Point-of-Sale, POS) erreicht, welches die Merkmale der unabhängigen Ansprüche umfasst.

Die vorliegende Erfindung wird mit Hilfe der als Beispiel gegebenen Beschreibung besser verständlich und durch die beiliegenden Figuren veranschaulicht :
Die Figur 1 zeigt ein Blockschema, das den Informationsfluss in einer ersten Ausführungsform des Systems der Erfindung zeigt, wobei der Kunde mit einem Mobilfunktelefon ausgerüstet ist, vorzugsweise ein GSM- oder UMTS-Mobilgerät, das spezielle Kurzmeldungen empfangen und senden kann.
Die Figur 2 zeigt ein Blockschema, das den Informationsfluss in einer zweiten Ausführungsform des Systems der Erfindung zeigt, wobei der Kunde mit einem Mobilfunktelefon ausgerüstet ist, vorzugsweise ein GSM- oder UMTS-Mobilgerät, das spezielle Kurzmeldungen empfangen und senden kann, und wobei das Terminal ein Internet- oder Intranet-taugliches Gerät ist.
Die Figur 3 zeigt ein Flussdiagramm eines Zahlungstransaktionsverfahrens gemäss der Erfindung.
Die Figur 4 zeigt ein Flussdiagramm eines Nachladetransaktionsverfahrens einer SIM-Karte, gemäss der Erfindung.

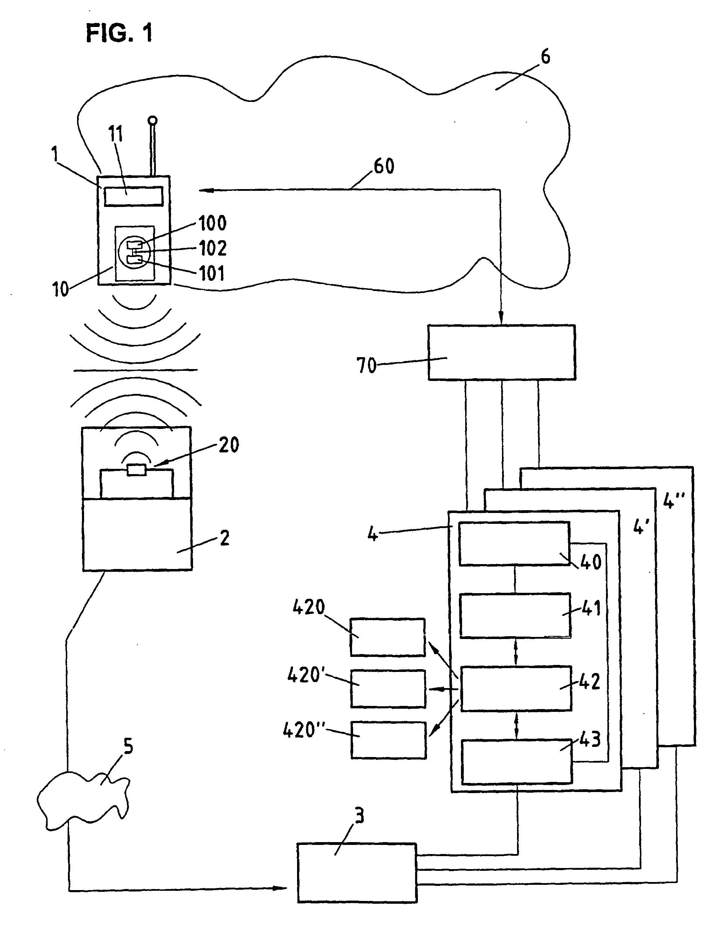

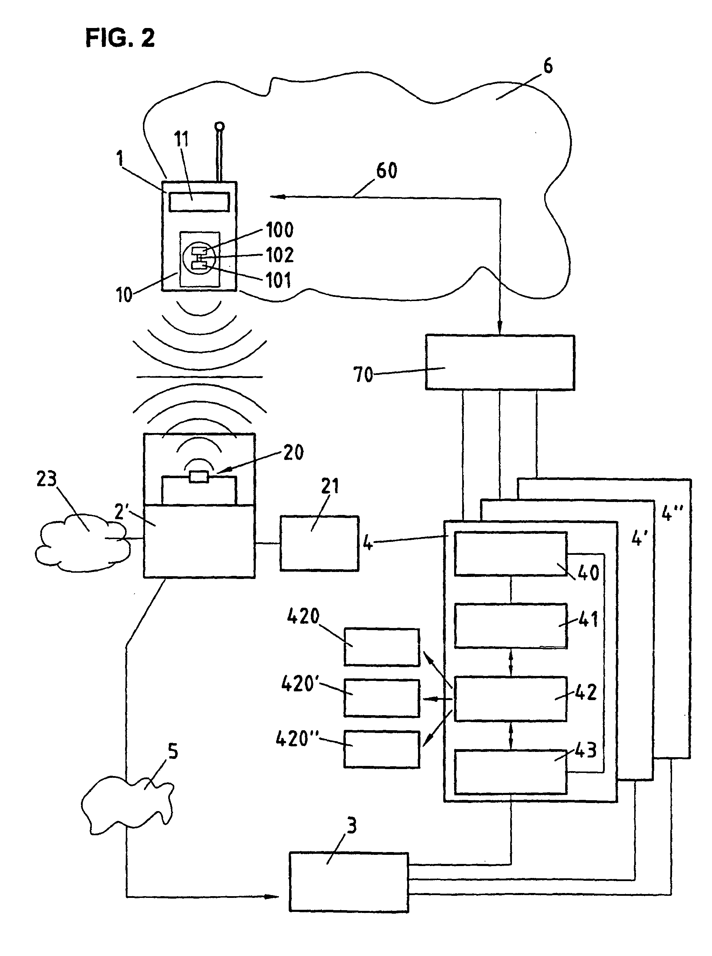

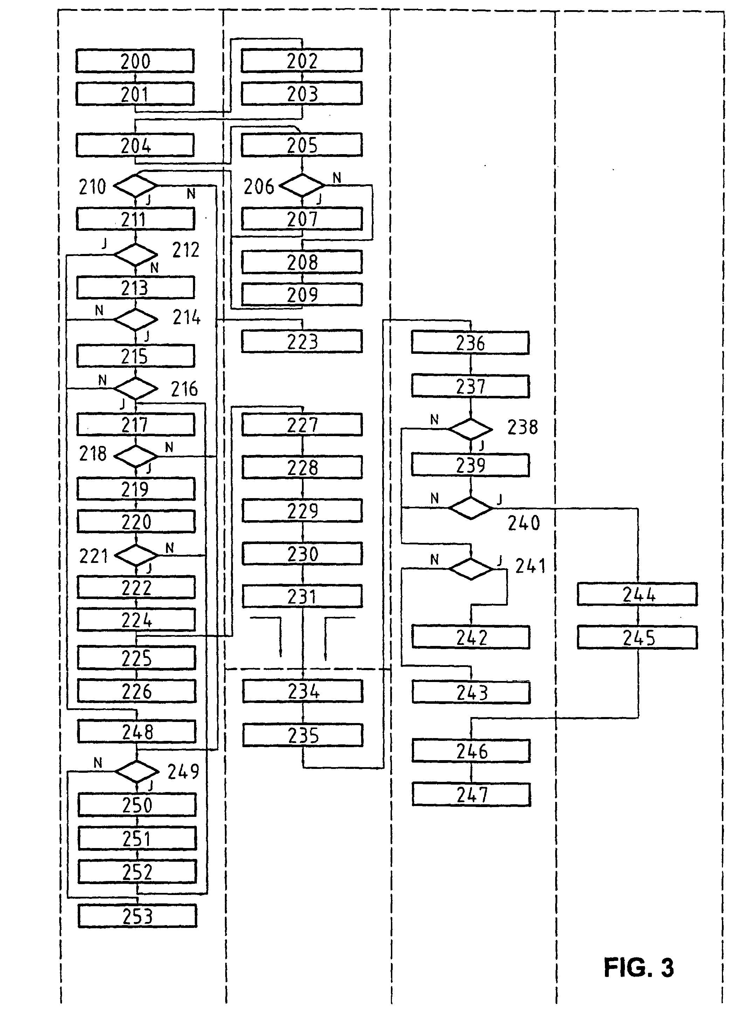

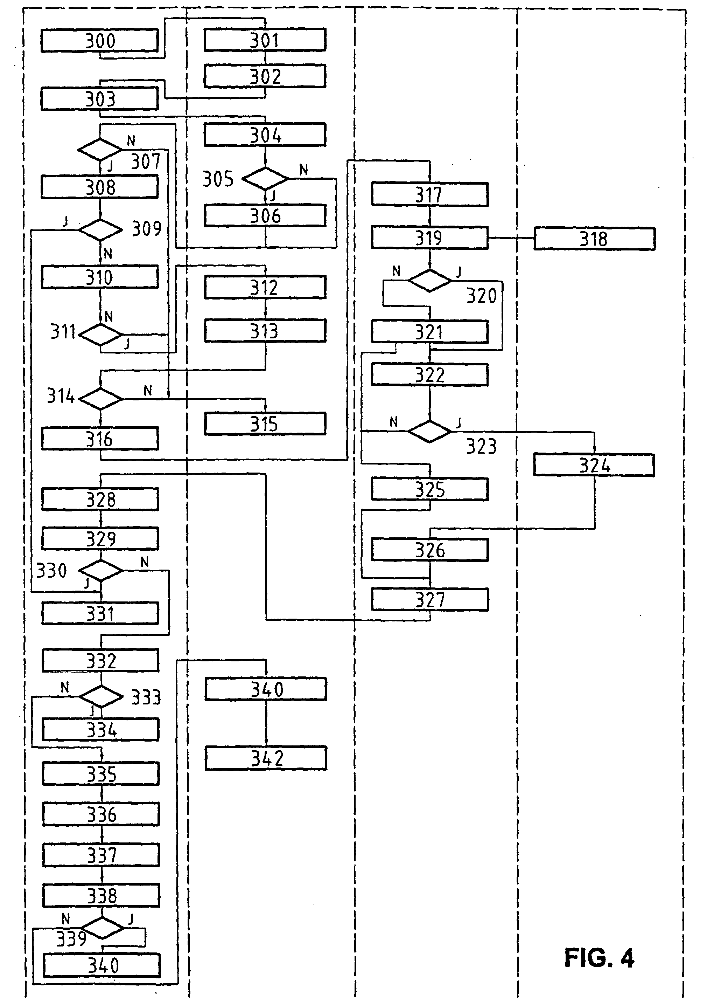

Das auf den Figuren 3 und 4 dargestellte Verfahren kann mit jeder Systemvariante, das beispielsweise in den Figuren 1 und 2 dargestellt ist, ausgeführt werden. Die erste und die zweite Variante benötigen beide ein Mobilfunktelefon mit einer SIM-Karte und einer zusätzlichen infraroten oder induktiven Schnittstelle, die später näher beschrieben wird.

Die Figur 1 zeigt den Informationsfluss in einer ersten Ausführungsform der Erfindung. Der Kunde ist mit einem Mobilfunktelefon ausgerüstet, das ein Mobilgerät, zum Beispiel ein GSM- oder UMTS-Mobilgerät 1 und ein Identifizierungsmodul 10, z.B. eine SIM-Karte, umfasst. Die Nummer 11 bezeichnet eine Bedienungseinheit, z.B. eine Tastatur. Der Kunde wird im Mobilfunknetz 6 mit dem Identifizierungsmodul 10 identifiziert. Die SIM-Karte weist einen konventionellen Mikrokontroller 100 auf, welcher in den Kunststoffträger der Karte eingelassen ist und für die GSM-Funktionalitäten der Karte zuständig ist - wie sie zum Beispiel im Artikel « SIM CARDS » von T. Grigorova und I. Leung beschrieben werden, welcher im « Telecommunication Journal of Australia », Vol. 43, No. 2, 1993, auf den Seiten 33 bis 38 erschienen ist - und für neue Funktionalitäten, welche zu einem späteren Zeitpunkt auf die SIM-Karten geladen werden. Die SIM-Karte kann vorzugsweise eine JAVA-fähige Karte sein, d.h. eine Karte mit einem Prozessor, der Instruktionen in der JAVA-Programmiersprache (oder in einer anderen Objekt-orientierten Sprache) ausführen kann. SIM-Karten nach dem Opencard-Konzept von IBM können auch angewendet werden. Die SIM-Karte weist ausserdem nicht dargestellte Kontaktmittel auf, über welche die Karte mit dem Mobilgerät 1 kommuniziert, in welchem sie eingeführt ist.

Die SIM-Karte weist ausserdem einen zweiten Prozessor 101 (CCI, Contactfree Chipcard Interface) auf, welcher für die kontaktlose Verbindung mit dem POT-Gerät 2 zuständig ist. Der zweite Prozessor führt unter anderem die weiter unten beschriebenen TTP (Thrusted Third Party)-Funktionen aus, um chiffrierte und signierte Meldungen zu empfangen und zu senden. Eine logische Schnittstelle 102 verbindet die beiden Prozessoren 101 und 102. Optional könnte ein einziger Prozessor diese beiden Prozessoren 101, 102 ersetzen.

Die kontaktlose Schnittstelle mit dem Terminal 2 kann beispielsweise mindestens eine in der SIM-Karte integrierte und mit dem zweiten Prozessor 101 verbundene Spule aufweisen (nicht dargestellt), mit der Daten in beiden Richtungen über eine Funkstrecke induktiv übertragen werden. Eine induktive Spule kann in einer Variante auch im Gehäuse des Mobilgeräts integriert werden. In einer weiteren Variante umfasst die kontaktlose Schnittstelle einen infraroten Sender-Empfänger an die Gehäuse des Mobilgeräts. In einer noch weiteren Variante ist die kontaktlose Schnittstelle in einem Erweiterungsmodul integriert, das entfernbar mit dem Mobilgerät verbunden werden kann. Die kontaktlose Kommunikation zwischen den beiden Geräten wird vorzugsweise verschlüsselt, zum Beispiel mit einem DEA-, DES-, TDES-, RSA- oder ECC-Sicherheitsalgorithmus.

Die kontaktlose Kommunikation ist vorzugsweise auf einem benannten Standard basierend, zum Beispiel auf dem IrDA-Protokoll (Infrared Data Association). Fehlerprüf- und Fehlerkorrekturmittel werden vorzugsweise für diese Kommunikation angewendet. Vorzugsweise werden ausserdem Endgerätidentifizierungsmittel angewendet, um eine Verbindung mit nur einem bestimmten Endgerät zuverlässig zu etablieren, falls mehrere Endgeräte, z.B. mehrere Mobilgeräte und/oder mehrere Terminals, in einem Raum vereinigt sind.

Bei einer induktiven Signalübermittlung vom Terminal zur Chipkarte wird vorzugsweise ein Phasenmodulations-Verfahren eingesetzt, während in der umgekehrten Richtung vorzugsweise die Amplitude der Signale moduliert wird.

Die SIM-Karte enthält vorzugsweise ein Sonderfeld IDUI (International Debit User Identification), mit dem der Kunde vom Terminal-Betreiber und/oder von einem Finanzinstitut identifiziert wird. Die Identifizierung IDUI wird vorzugsweise in einem ersten gesicherten Speicherbereich eines der beiden Prozessoren 101, 102 gespeichert. Die IDUI enthält mindestens eine Identifizierung vom Netzbetreiber, eine Benutzernummer, die ihn von anderen Kunden beim selben Netzbetreiber identifiziert, eine Benutzerklassenangabe, die definiert, welche Dienste er benutzen darf, und optional noch eine Landidentifizierung. Ausserdem enthält die IDUI Sicherheitsdaten, unter anderem einen Transaktionszähler Tz, ein Lade-Token LT_{c}, und ein Time-Out-Feld TO, das die Validierungszeit angibt. Die Funktion von diesen verschiedenen Daten wird später erläutert.

Die SIM-Karte enthält ausserdem einen zweiten, gesicherten Speicherbereich, in welchem elektronische Geldeinheiten (Geldbeträge) gespeichert werden können.

Das symbolisch dargestellte Terminal 2 ist ebenfalls mit einem kontaktlosen Sender-Empfänger 20 versehen, zum Beispiel mit einer induktiven Spule oder mit einem infraroten Sender-Empfänger. Dank dieser Schnittstelle kann das Mobilsystem 1,10 kontaktlos mit dem Gerät 2 in beiden Richtungen kommunizieren.

Das Terminal 2 kann zum Beispiel ein speziell mit einer Funkschnittstelle 20 ausgerüsteter Point-of-Sale (POS) in einem Geschäft sein und wird mit einem Sonderfeld POSID (Point Of Sale Identification) identifiziert. Die POSID hängt von der Anwendung ab ; im Falle einer Geschäftskasse enthält sie eine Identifizierung vom Netzbetreiber, eine Areaidentifizierung (Teilgebiet in einem Land), eine POS-Nummer, die ihn von anderen POS beim selben Netzbetreiber identifiziert, eine POS-Klassenangabe, die definiert, welche Dienste er benutzen oder anbieten darf, das Datum, die Zeit, die benutzte Währung (SDR, Euro oder Dollars) und optional noch eine Landesidentifizierung.

Das Terminal 2 wird vorzugsweise mit nicht dargestellten Dateneingabe-Mitteln versehen, zum Beispiel mit einer Tastatur, und mit nicht dargestellten Datenanzeige-Mitteln, zum Beispiel mit einem Bildschirm.

Die IDUI-Identifizierung wird dem Terminal über die kontaktlose Schnittstelle 10/101 übertragen, und im Terminal mit der POSID und mit dem erfassten Transaktionsbetrag A, verknüpft, so dass ein elektronischer Transaktionsbeleg entsteht, der mit einem TTP (Trusted Third Party)- oder PTP (Point-to-Point)-Prozess verschlüsselt und signiert wird.

Der Transaktionsbeleg wird dann über ein nicht dargestelltes Modem und durch das Kommunikationsnetz 5, zum Beispiel durch ein öffentliches vermitteltes Fernsprechnetz an die ebenfalls mit dem Netz 5 verbundene Clearingeinheit 3 übermittelt. Diese empfängt die elektronischen Belege von verschiedenen Terminals 2, unabhängig vom Land oder Verkehrsbereich, und unabhängig vom Land oder Finanzinstitut des Kunden. In der Clearingeinheit 3 werden diese Transaktionsbelege nach Finanzinstitut, eventuell auch nach Operator, geordnet und dem Dienstzentrum 4, 4', 4" des entsprechenden Finanzinstitutes zugestellt. Clearingeinheiten an sich sind in der GSM-Technik schon bekannt und werden beispielsweise für das Sammeln und für die Weiterverteilung von Verbindungskosten verwendet. Die Clearingeinheit kann beispielsweise eine Datenbank enthalten, die angibt, mit welchem Finanzinstitut der vorher mit seinem IDUI identifizierte Kunden affiliert ist.

Die durch die Clearingeinheit 3 behandelten elektronischen Transaktionsbelege werden an das Dienstzentrum 4, das vorzugsweise über einen Finanzserver verfügt, weitergeleitet. Im Finanzserver werden die eingereichten Transaktionsbelege zuerst entschlüsselt und in einem Zwischenspeicher 43 gespeichert. Ein Abgleichmanagement-Modul 42 schreibt dann den vom Kunden signierten Transaktionsbetrag den entsprechenden Bankkonten 420, 420' und/oder 420" des Terminal-Betreibers gut. Diese Konten können durch dasselbe oder durch ein anderes Finanzinstitut verwaltet werden. Das Abgleichmanagement-Modul führt ausserdem Kontrollbuchungen zum Konto des Kunden durch. Entsprechend wird das Kontrollkonto 41 des Kunden beim Finanzinstitut belastet, oder werden die Transaktionsdaten für eine spätere Kontrolle gespeichert. Der Finanzserver enthält ausserdem einen TTP-Server 40, um Belege und Meldungen mit dem TTP (Thrusted Third Party)-Algorithmus zu chiffrieren und zu signieren. Ausserdem ist jeder Finanzserver 4 mit einem SIM-Server 70 verbunden, zum Beispiel mit einem SICAP-Server. Das SICAP-Verfahren wurde unter anderem im Patent EP689368 beschrieben, und erlaubt, Dateien, Programme und auch Geldbeträge zwischen dem SICAP-Server 70 und der SIM-Karte 10 im Mobilgerät 1 über das öffentliche GSM-Netz 6 auszutauschen (Pfeil 60). Andere Übertragungsprotokolle können auch für die Datenübertragung zwischen dem SIM-Server und den SIM-Karten angewendet werden. Dadurch kann beispielsweise Geld auf der SIM-Karte 10 nachgeladen werden, wie später näher beschrieben. Der SIM-Server 70 ermöglicht ausserdem die gesteuerte Kommunikation zwischen dem Kunden und dem TTP-Server 40 beim Finanzinstitut.

Die Figur 2 zeigt den Informationsfluss in einer zweiten Ausführungsform der Erfindung. Der Kunde ist ebenfalls in dieser Variante mit einem Mobilfunktelefon ausgerüstet, zum Beispiel mit einem GSM-Funktelefon 1 mit einer SIM-Karte, vorzugsweise mit einer SICAP-tauglichen SIM-Karte und/oder mit einer JAVA-tauglichen Karte. Ebenfalls ist eine induktive oder infrarote Schnittstelle im Mobilsystem 1 enthalten, mit der eine kontaktlose Verbindung mit dem Terminal 2 durchgeführt werden kann. Daten und/oder Programme können auf diese Weise in beiden Richtungen zwischen dem Terminal 2 und der SIM-Karte 10 im Mobilsystem ausgetauscht werden.

Das Terminal 2' ist aber in diesem Fall ein Rechner, der vorzugsweise mit einem Netz, zum Beispiel im Internet oder einem Intranet, verbunden ist. Verschiedene Informationen oder Angebote, zum Beispiel Produkt-Angebote, können beispielsweise mit einem geeigneten Menü auf dem Bildschirm des Rechners 2 offeriert werden. Der Kunde kann diesen Rechner mit seinem Mobilgerät steuern. Beispielsweise kann er die Position eines Cursors in einem Menü von zum Verkauf angebotenen Produkten oder Informationen durch Betätigen der Cursor-Verschiebetasten auf der Tastatur 11 seines Mobiltelefons steuern. Die Cursor-Verschiebeinstruktionen werden über die kontaktlose Schnittstelle 101, 20 zum Rechner 2' gesendet. Der Benutzer betätigt eine Bestätigungstaste, zum Beispiel die Taste # auf seiner Tastatur, um die ausgewählte Menüoption zu bestätigen, zum Beispiel um ein Produkt zu bestellen.

Die im Mobilgerät 1,10 gespeicherte Kundenidentifizierung wird mit der POSID und mit dem der angewählten Menüoption entsprechenden Transaktionsbetrag in einem elektronischen Transaktionsbeleg verknüpft, TTPoder PTP-verschlüsselt und signiert. Der Transaktionsbeleg enthält vorzugsweise eine aus der SIM-Karte 10 gewonnene Kundenidentifizierung IDUI, eine der angewählten Menüoption entsprechende Lieferantenidentifizierung, und eine der angewählten Menüoption entsprechende Produktidentifizierung, vorzugsweise im Flexmart-Format wie in der Patentanmeldung PCT/CH96/00464 vorgeschlagen. Dieser Beleg wird durch ein Flexmart-Modul 21 ermittelt. Das Flexmart-Modul ist vorzugsweise eine vom Rechner 2' ausgeführte Software-Anwendung.

Analog zur ersten Ausführungsform wird dann der elektronische Transaktionsbeleg an den entsprechenden Finanzserver 4, 4' oder 4" durch die Clearingeinheit 3 übermittelt und dort verarbeitet.

Ein Zahlungstransaktionsverfahren wird jetzt mit Hilfe der Figur 3 näher beschrieben. Dieses Verfahren kann auf beliebige Ausführungsformen der Erfindung gemäss den Figuren 1 und 2 angesetzt werden. Dieser Ablauf ist jedoch allgemein gültig und nicht auf GSM- oder UMTS-Prozesse beschränkt.

Die erste Kolonne in Figur 3 zeigt die Verfahrensschritte, die hauptsächlich das Mobilfunktelefon 1 des Kunden involvieren ; die zweite beschreibt die Verfahrensschritte, die vom Terminal 2 ausgeführt werden ; die dritte betrifft die Operationen vom Dienstzentrum 4 und die vierte die Effekte auf die verschiedenen Konten beim Finanzinstitut. Es muss aber bemerkt werden, dass viele Verfahrensschritte entweder mit dem Mobilfunktelefon 1, zum Beispiel als Prozess innerhalb der SIM-Karte 10 oder im Terminal 2 ausgeführt werden können. Zum Beispiel kann die Dateneingabe entweder mit dem Terminal oder mit dem Mobilfunktelefon 1 erfolgen, wenn dieses eine Tastatur enthält, wie zum Beispiel ein GSM-Mobilgerät.

Dieses Verfahren setzt im Schritt 200 voraus, dass die Identifizierungskarte 10 des Kunden einen gesicherten Speicherbereich umfasst, in welchem elektronische Geldeinheiten gespeichert werden. Wertkarten sind an sich schon bekannt ; wir werden später in Bezug auf Figur 4 näher erläutern, wie der Geldbetrag nachgeladen werden kann. Ausserdem beschreibt die Patentanmeldung EP96810570.0 ein Verfahren, um SIM-Karten mit einem Geldbetrag nachzuladen.

Das Mobilsystem 1 bzw. 10 wird im Schritt 201 funktionsbereit geschaltet, zum Beispiel mit dem Einschalten des Mobilgerätes. Ebenso wird im Schritt 202 das Terminal 2 aktiviert. Das Terminal 2 ruft dann im Schritt 203 in einem Broadcastverfahren den nächsten, unbestimmten Kunden auf (Kartenpaging).
Wenn die Verbindung zwischen dem Terminal 2 und dem Mobilfunktelefon 1, 10 hergestellt worden ist, übergibt im Schritt 204 das Mobilfunktelefon dem Terminal seine Identifizierung IDUI (International Debit User Identification) und die Bestätigung, dass er solvent ist. Die IDUI ist in einem ersten gesicherten Bereich der Karte abgelegt. Ob die Solvenz ausreicht, kann in diesem Moment noch nicht entschieden werden.

Das Terminal 2 enthält eine vorzugsweise vom Finanzserver 4 periodisch aktualisierte Schwarzliste über zu sperrende Kunden. Die vom Kunden übermittelte IDUI wird mit der Schwarzliste verglichen (Schritt 205) (Erlaubnisdaten). Wenn die vom Kunden übergebene IDUI in der Schwarzliste gefunden wird (Schritt 206), wird ein Blockierflag im Schritt 207 gesetzt. Wenn keine Übereinstimmung gefunden wird, kann auf der Tastatur des Terminals 2 der Transaktionsbetrag A eingegeben werden. In einer Variante kann der Transaktionsbetrag A auch mit den Eingabemitteln 11 des Mobilgeräts 1 eingegeben werden. Das Terminal 2, oder in einer Variante die SIM-Karte 10, verknüpft dann diesen Betrag mit der Identifizierung des Terminals 2 und der IDUI und sendet dem Kunden diesen Belastungsbeleg. Vorzugsweise wird ausserdem noch eine Referenzwährung, wie zum Beispiel SDR, Euro oder Dollar, eingeschlossen.

Da die Kommunikation signiert wird, kann im Schritt 210 geprüft werden, ob der Belastungsbeleg mit der IDUI korreliert. Wenn nicht, wird der Rückweisungsgrund am Terminal 2 angezeigt (Schritt 223). Sonst wird im Schritt 211 ein Blockierflag geprüft. Ist es gesetzt (212), erfolgt ein Check-up mit dem Finanzserver 4 (Schritt 248). Ist er nicht gesetzt, erfolgt ein Area-Check-up (Schritt 213). Es können dadurch SIM-Karten je nach Benutzungs-Area gesperrt werden. Wenn der Area Check-up negativ ist, erfolgt ein Check-up mit dem Finanzserver 4 (Schritt 248) ; sonst wird ein Time-Out Check-up gemacht (Schritt 215). Es wird geprüft, ob die Validationszeit, während der Transaktionen ohne Checkup durchgeführt werden können, schon abgelaufen ist. Ist die Validationszeit abgelaufen (216), erfolgt ein Check-up mit dem Finanzserver (Schritt 248) ; sonst wird der Kunde im Schritt 217 aufgefordert, sein Benutzerpasswort am Mobilgerät 1 manuell einzugeben. Ist das eingegebene Passwort korrekt (Schritt 218), wird der Betrag A gegebenenfalls in die Einheitswährung (zum Beispiel SDR) umgerechnet (Schritt 219). Damit wird ein internationaler Einsatz des Konzepts ermöglicht. Sonst wird im Schritt 223 auf dem Terminal 2 die Rückweisung mit Grundangabe angezeigt.

Das Mobilfunktelefon 1/10 prüft dann im Schritt 220, ob der zu belastende Transaktionsbetrag A mit dem im zweiten Speidherbereich geladenen Geldbetrag gedeckt ist (Solvenzprüfung). Wenn dies nicht der Fall ist, wird am Bildschirm des Terminals dieser Rückweisungsgrund angezeigt (Schritt 223).

Wenn alle diese Prüfungen erfolgt sind, wird im Schritt 222 die Transaktion mit einem Transaktionszähler Tz gezählt, der inkrementiert wird. Dieser Zähler entspricht der Anzahl der mit der Karte 10 abgelaufenen Transaktionen. Im Schritt 224 werden dann der Transaktionsbetrag A, die Terminal-Identifizierung POSID und die Benutzeridentifizierung IDUI in einem Transaktionsbeleg verknüpft, welcher zusätzlich zertifiziert und optional verschlüsselt und eventuell noch komprimiert wird. Das ECC-Verfahren (Elliptic Curve Cryptosystem) kann beispielsweise für die Zertifizierung angewendet werden. Ein geeignetes Zertifizierungs- und Verschlüsselungsverfahren wird später als Beispiel näher erläutert.

Der belastete Transaktionsbetrag A wird dann im Schritt 225 auf dem gespeicherten Geldbetragskonto abgebucht und der Transaktionsbeleg wird im Schritt 226 in einem Stack auf dem Identifizierungmodul 10 abgelegt. Dieser Kartenstack beim Kunden kann nach Bedarf zwecks detaillierter Kontrolle vom Finanzserver 4 abgerufen werden. Vorzugsweise kann der Kunde selber die im Stack gespeicherten Transaktionsbelege auf seinem Mobilgerät 1 anzeigen.

Nach dem Schritt 224 wird der Transaktionsbeleg dem Terminal 2 zur Abrechnung übergeben, und die Kundensignatur wird vom Terminal geprüft (Schritt 227). Optional wird im Schritt 228 ein Papierbeleg am Terminal für den Kunden ausgedruckt.

Im Schritt 229 wird dann im Terminal 2 der Belastungsbeleg mit eventuell zusätzlichen Daten verknüpft, und der Transaktionsbeleg wird vom Terminal 2 elektronisch signiert und optional komprimiert und chiffriert. Der auf diese Weise vorbereitete elektronische Transaktionsbeleg wird dann optional im Schritt 230 in einem Stack im Terminal 2 abgelegt. Der Stack enthält Transaktionsbelege von verschiedenen Kunden. Die Transaktionsbelege werden dann individuell oder gruppiert während dem Schritt 231 der Clearingeinheit 3 übertragen. Die Übertragung kann entweder gleich nach der Transaktion erfolgen, oder es können in periodischen Zeitabständen (zum Beispiel jede Stunde oder jeden Tag) mehrere Transaktionsbelege aus dem Stack übertragen werden. Ein Batch-Prozess, um alle Transaktionsbelege zum Beispiel in der Nacht zu übertragen, kann auch angewendet werden.

Die Clearingeinheit 3 empfängt individuelle oder gruppierte Transaktionsbelege aus mehreren Terminals 2 in derselben geographischen Zone (Schritt 234). Mehrere geographisch verteilte Clearingseinheiten können vorgesehen werden. Im Schritt 235 teilt die Clearingseinheit 3 die von verschiedenen Terminals empfangenen Transaktionsbelege den entsprechenden Finanzinstituten oder Dienstanbietern zu, und leitet diese Transaktionsbelege entsprechend weiter.

Wenn die Transaktionsbelege chiffriert sind, müssen sie von der Clearingeinheit zuerst entschlüsselt werden, um einem Finanzserver 4, 4', 4" zugeteilt zu werden, und dann wieder von der Clearingseinheit chiffriert, um sie weiterzuleiten. In einer bevorzugten Variante werden jedoch die Datenelemente in den Feldern IDUI und eventuell POSID des Transaktionsbeleges, die für das Clearing benötigt sind, vom Terminal 2 nicht chiffriert. Dadurch kann eine gesicherte, end-to-end verschlüsselte Übertragung der Transaktionsbelege zwischen den Terminals und den Finanzservern 4, 4', 4" erreicht werden.

Der zuständige Finanzserver empfängt im Schritt 236 die Transaktionsbelege, und der TTP-Server 40 dekomprimiert und entschlüsselt sie (falls benötigt), und überprüft die Echtheit der Signaturen vom Terminal 2 und vom Identifizierungsmodul 10. Im Schritt 237 wird geprüft, ob der POSID und/oder die IDUI sich in einer Revocation List befinden. Ist der Test positiv (238), weil weder die Terminalidentifizierung noch die Kundenidentifizierung IDUI sich auf dem Revocation List befinden, erfolgt im Schritt 239 ein Test des Ladetokens LT. Der Ladetoken LT gibt die Anzahl der Nachladungen der Karte 10. Dieser Ladetoken wird im Finanzserver (LTₛ) und im Identifizierungsmodul 10 (LT_{c}) nach jedem Nachladeprozess aktualisiert, wie später beschrieben. Eine Kopie des Ladetokens LT_{c} ist im Feld IDUI im Transaktionsbeleg übertragen. Der vom Mobilfunktelefon 1,10 mitgeteilte Ladetoken LT_{c} muss gleich wie der im Finanzserver 4 gespeicherte Ladetoken LTₛ sein. Falls Nachladebelege noch auf dem Weg zwischen der Finanzserver 4 und dem Mobilsystem 1,10 sind, kann LT_{c} temporär auch kleiner sein als LTₛ. Der Finanzserver 4 prüft also ob LT_{c} ≤ LTₛ.

Wird im Schritt 240 diese Bedingung nicht verifiziert, wurde wahrscheinlich ein nicht autorisierter Nachladeprozess durchgeführt und das Verfahren geht zum Schritt 241 über. Es wird hier unterschieden, ob die Fälschung vom Terminal oder vom Kunden gemacht worden ist. Ist der Kunde verantwortlich, wird er im Schritt 242 in einer Schwarzliste eingetragen. Ein Kundensperrungsbeleg wird vorzugsweise generiert und an das Mobilfunktelefon 1, 10 des Kunden geschickt, um das Blockierflag zu setzen und dieses System zu sperren, sowie an alle Terminals oder zumindest an alle Terminals im einem vordefinierten geographischen Bereich, um diesen Kunden in der Schwarzliste dieses Terminals einzutragen. Wurde dagegen das Problem vom Terminal verursacht, wird dieses im Schritt 243 in einer Terminal-Schwarzliste eingetragen.

Wird im Schritt 240 die Ladetokenprüfung bestanden, kann im Schritt 244 der Transaktionsbetrag A im Transaktionsbeleg einem Kundenprüfkonto 41 beim Finanzinstitut belastet werden. Im Schritt 245 wird entsprechend der Transaktionsbetrag A einem Konto 420, 420' oder 420" des Terminal-Betreibers bei einem Finanzinstitut gutgeschrieben. Bearbeitungsgebühren können auch von einem Finanzinstitut und/oder vom Terminalbetreiber oder vom Netzoperator dem Konto 420 und/oder einem Kundenkonto belastet werden.

Im Schritt 246 trägt dann der Finanzserver 4 diese Transaktion in den Transaktionszähler ein. Ein Prozess erfolgt dann im Schritt 247, um die Werte vom Ladetoken LT_{c} und vom Transaktionszähler Tz im Mobilfunktelefon zu aktualisieren

Wir kommen auf den Prozess im Mobilfunktelefon 1, 10 zurück. Wie schon erklärt, gelangt diese Einrichtung zum Schritt 248, wenn ein Sicherheitsproblem im Schritt 212, 214 oder 216 festgestellt wird. In diesem Fall erfolgt ein kompletter Checkup mit dem Finanzserver, vorzugsweise über das Mobilfunknetz 6. Der Checkup umfasst zum Beispiel einen Test und eine Erneuerung des Authentifizierungszertifikats sowie eine Überprüfung von allen ausgeführten Parametern, zum Beispiel der Ladetoken LT, der Transaktionzähler Tz, der Blackliste, usw. Ist das Ergebnis des Checkups negativ (Schritt 249), wird das Blockierflag gesetzt, so dass das Mobilsystem 1, oder mindestens die betreffende Anwendung in der SIM-Karte 10, gesperrt wird (Schritt 253). Zeigt im Gegenteil diese Prüfung, dass höchstwahrscheinlich keine Fälschung versucht wurde, wird im Schritt 250 die Validationszeit neu gesetzt. Mit der Validationszeit kann zum Beispiel ein Identifizierungsmodul gesperrt werden, wenn es während einer vordefinierten Zeit, zum Beispiel ein Jahr, nicht benutzt wird. Diese Angabe muss daher nach jeder Benutzung neu eingestellt werden. Der Blockierflag wird dann im Schritt 251 gelöscht, und, wenn nötig, eine neue Area im Schritt 252 gesetzt.

Wichtig zu bemerken ist, dass der Belastungsprozess mit unterschiedlichen Währungen erfolgen kann, zum Beispiel auf der Basis der im Telekommunikationsbereich üblichen SDR (Sonderziehungsrechte) oder mit einer anderen Referenzwährung (zum Beispiel Euro oder Dollar). Der maximale Betrag auf der Karte ist je nach Kundenklasse definiert. Minimal ist ein Defaultwert in SDR möglich. Jedes Terminal 2 speichert den für ihn relevanten SDR-Wert (z.B. währungsspezifisch), der ihm im Einbuchungsprozess vom Server mitgeteilt wird. Je nach Kursschwankungen werden die Terminals vom Finanzserver automatisch mit aktuellen Kursen versorgt.

Ein Verfahren zum Nachladen des Mobilsystems 1, 10 mit einem Geldbetrag wird jetzt mit Hilfe der Figur 4 näher beschrieben. Dieses Verfahren kann ebenfalls auf beliebige Ausführungsformen der Erfindung gemäss den Figuren 1 oder 2 angesetzt werden.

Ein Nachladeprozess erfolgt in diesem Beispiel mit dem Mobilfunktelefon 1,10 des Kunden und dem Terminal 2 zusammen. Es wäre jedoch auch möglich, den Geldbetrag auf dem Identifizierungsmodul 10 mit einer Transaktion, die nur das Mobilfunktelefon 1,10 und das Dienstzentrum 4 betrifft, durchzuführen. Diese Lösung hätte den Vorteil, das der Kunde sich nicht an einem Terminal begeben muss; gewisse Sicherheitsprüfungen können jedoch in diesem Fall nicht durchgeführt werden. Diese Variante wird daher vorzugsweise nur angewendet, um kleinere Geldbeträge zu übertragen oder wenn zusätzliche Sicherheitsmechanismen vorgesehen sind. Ein direkter Nachladeprozess vom Finanzserver 4 könnte aber auch angesetzt werden. Je nach Kundenklasse, oder auch nach Bedarf, kann vom Finanzserver der Beleg-Kartenstack beim Kunden, zwecks detaillierter Kontrolle, abgerufen werden. Nach dem Nachladeprozess kann der Stack vom Finanzserver gelöscht werden.

Die erste Kolonne in Figur 4 zeigt die Verfahrensschritte, die hauptsächlich das Mobilfunktelefon 1,10 involvieren; die zweite beschreibt die Verfahrensschritte, die vom Terminal 2 ausgeführt werden; die dritte betrifft die Operationen vom Dienstzentrum 4 und die vierte die Effekte auf die verschiedenen Konten beim Finanzinstitut. Es muss aber bemerkt werden, dass viele Verfahrensschritte entweder mit dem Mobilfunktelefon 1, 10, zum Beispiel innerhalb der SIM-Karte 10, oder mit dem Terminal 2 ausgeführt werden können. Zum Beispiel können die Verfahrensschritte, welche die Dateneingabe betreffen, entweder auf dem Terminal oder auf dem Mobilgerät 1 ausgeführt werden, wenn das Mobilgerät eine Bedienungseinheit enthält. Die Kommunikation zwischen den beiden Teilen wird vorzugsweise verschlüsselt, zum Beispiel mit einem DEA-, DES-, TDES-, RSA- oder ECC-Sicherheitsalgorithmus.

Im Schritt 300 wird zuerst das Mobilfunktelefon 1,10, operativ für den Nachladeprozess freigeschaltet ; das Terminal 2 wird seinerseits auch im Schritt 301 aktiviert. Das Terminal 2 ruft dann im Schritt 302 in einem Broadcastverfahren das nächste, unbestimmte Mobilsystem 1,10 auf (« Kartenpaging »).

Wenn die Verbindung zwischen dem Terminal 2 und dem Mobilfunktelefon 1,10 hergestellt worden ist, übergibt im Schritt 303 der Kunde dem Terminal seine Identifizierung IDUI (International Debit User Identification) und den Typ des zu startenden Prozesses, hier eine Nachladung.

Das Terminal 2 enthält eine vorzugsweise vom Finanzserver 4 periodisch aktualisierte Schwarzliste über zu sperrende Mobilsysteme (Revocation list). Die vom Kunden übermittelte IDUI wird mit der Schwarzliste verglichen (Schritt 304). Wenn die vom Kunden übergebene IDUI in der Schwarzliste gefunden wird (Schritt 305), wird ein Blockierflag im Schritt 306 gesetzt. Danach, oder wenn keine Übereinstimmung gefunden wird, wird im Schritt 307 geprüft, ob die Aufforderung mit der IDUI korreliert. Wenn nicht, wird der Rückweisungsgrund am Terminal 2 angezeigt (Schritt 315). Sonst wird im Schritt 308 das Blockierflag geprüft. Ist es gesetzt, wird das Mobilfunktelefon 1, 10, oder mindestens die betreffende Anwendung in der Identifizierungskarte 10, gesperrt (Schritt 331). Ist es nicht gesetzt, wird der Kunde im Schritt 310 aufgefordert, sein Benutzerpasswort am Mobilgerät 1 manuell einzugeben. Ist das eingegebene Passwort nicht korrekt (Schritt 311), wird ebenfalls das Blockierflag gesetzt und der Rückweisungsgrund am Terminal 2 angezeigt (Schritt 315) ; sonst ist der Prozess frei für die Nachladung und der Kunde wird im Schritt 312 aufgefordert, einen Nachladebetrag A einzugeben. In der dargestellten Variante kann der Nachladebetrag am Terminal 2 eingegeben werden ; dieser Betrag wird im Schritt 313 mit der POSID und mit der IDUI verknüpft, signiert und an die Karte 10 übermittelt. Der Betrag A könnte aber auch am Mobilgerät 1 erfasst werden ; in diesem Fall ist kein Terminal involviert und die POSID wird daher nicht benötigt.

Im Schritt 314 wird geprüft, ob die IDUI in den vom Terminal 2 empfangenen Daten mit der eigenen IDUI übereinstimmt. Wenn nicht, wird der Rückweisungsgrund am Terminal 2 angezeigt (Schritt 315) ; sonst wird der gewünschte und am Terminal eingegebene Nachladebetrag auf dem Bildschirm des Mobilgeräts 1 angezeigt. Im Schritt 316 werden dann die POSID (optional), die IDUI, die schon erwähnte Anzahl Zahlungstransaktionen Tz, die auf der Karte gespeicherte Anzahl ausgeführter Nachladeprozesse (LTc, Lade-Token Kunden) und der Restbetrag auf der Karte DRA (Debit Rest Amount) verknüpft, signiert, verschlüsselt und dann optional komprimiert. Es entsteht dadurch ein Nachladebeleg. Optional kann auch der Beleg-Stack auf der Karte übermittelt werden, zum Beispiel je nach Kundenklasse, bei Kartenausgabe oder nach Bedarf während der Nutzung bei Solvenzproblemen. Die POSID wird nur in den Nachladebeleg integriert, wenn der Kunde über ein Mobilgerät ohne geeignete Eingabemittel verfügt. Der Nachladebeleg wird dann an den Finanzserver 4, 4', bzw. 4" durch das Netz 6 übermittelt, wo der TTP-Server 40 diesen Beleg im Schritt 317 empfängt, gegebenenfalls entschlüsselt und dekomprimiert, und die Signatur vom Kunden und gegebenenfalls vom Terminal überprüft.

Im Schritt 319 werden mit Hilfe der Tabelle 318, welche die Anzahl und Token bezüglich der Prozesse zwischen dem Kunden und dem Finanzserver speichert, folgende Prüfungen durchgeführt :

Beträgeprüfung : Die Summe ΣA aller auf dem Identifizierungsmodul 10 geladenen Beträge, inklusive der Startsumme, muss gleich oder kleiner sein als die Summe aller Kontrollbelastungen ΣKB und des Restbetrags DRA auf dem Identifizierungsmodul. Die Summe kann kleiner sein, weil die Belege, die noch zwischen dem Mobilfunksystem 1,10, der Clearingeinheit 3 und dem Finanzserver 4, 4', 4" sind, in diesem Moment noch nicht erfasst werden können.

Ladetoken-Prüfung : Die Anzahl von Lade- bzw. Nachlade-Transaktionen wird im Mobilfunktelefon, zum Beispiel in der SIM-Karte mit einem Token LTc und im Finanzserver 4 mit einem anderen Token LTs gezählt. Diese beide Token müssen gleich sein.

Transaktionszählerprüfung : Für jede Zahlungstransaktion wird der Transaktionszähler Tz im Mobilfunktelefon 1,10 inkrementiert ; in jedem Nachladebeleg wird auch Tz übertragen. Der beim Finanzserver gespeicherte Transaktionszähler T_{zs}, der durch die vom Kunden transferierten Belege inkrementiert wird, muss gleich oder eventuell kleiner sein als der Transaktionszähler Tz im Mobilfunktelefon 1, 10.

Wenn eine dieser drei Bedingungen nicht erfüllt ist (Schritt 320), wird der Blockierflag im Schritt 321 gesetzt und der Nachladeprozess im Schritt 325 zurückgewiesen. Sonst wird im Schritt 322 der Kontostand 41 des Kunden überprüft. Reicht er nicht für die Nachladung, wird im Schritt 325 ebenfalls die Rückweisung aufbereitet.

Wenn das Konto (oder die Kontolimite) des Kunden beim Finanzinstitut 4 für den nachzuladenden Betrag reicht (Schritt 322, 323), wird dieser Betrag bei einem Kundenkonto des Finanzinstitutes abgehoben (324), inklusive allfälliger Kommissionen. Gleichzeitig wird auf dem Prüfkonto 41 der geforderte Nachladebetrag gebucht. Ein Nachladebeleg wird dann im Schritt 326 aus der POSID, der IDUI, dem Betrag A, dem neuen Lade-Token LTn, und einem vordefinierten Time Out Inkrement TOi erstellt. Dieser Nachladebeleg wird im Schritt 327 signiert, optional verschlüsselt und komprimiert, und an das Mobilsystem 1,10 des Kunden übertragen. Dieses prüft während dem Schritt 328, ob die Signatur im Beleg vom Finanzserver stammt, und verifiziert während dem Schritt 329, ob das Blockierflag gesetzt ist. Falls es gesetzt ist (Schritt 330), wird das Mobilfunktelefon 1, oder mindestens die betreffende Anwendung, im Schritt 331 gesperrt. Sonst wird noch geprüft, ob der Finanzserver eine Rückweisung aufgefordert hat (Schritt 332), was zur Unterbrechung des Prozesses mit Anzeige des Rückweisungsgrundes führt (Schritt 334).

Wenn alle Tests erfolgreich bestanden sind, wird im Schritt 335 das Kartenkonto mit dem geforderten Nachladebetrag gebucht. Der alte Ladetoken LTc wird dann mit dem vom Finanzserver übermittelten neuen Ladetoken LTn ersetzt (Schritt 336), der Transaktionszähler Tz auf der Karte wird im nächsten Schritt 337 zurückgesetzt, und der Time Out TOi im Schritt 338 neu gesetzt. Wenn im Schritt 339 festgestellt wird, dass im Nachladebeleg das POSID enthalten ist, wird ausserdem im Schritt 340 eine neue Area gesetzt.

Der Nachladebetrag wird dann als Bestätigung angezeigt, entweder am Bildschirm des Mobilgeräts oder am Terminal (Schritt 341). Schliesslich wird auch noch der Gesamtkontostand auf der Karte angezeigt (Schritt 342).

In dem mit Hilfe der Figuren 3 und 4 beschriebenen Beispiel wird das "reale" Bankkonto des Kunden beim Finanzinstitut schon bei der Nachladung der Karte belastet. Andere Zahlungsvarianten, zum Beispiel mit Kreditkarte oder durch Erstellung einer Rechnung, sind natürlich im Rahmen dieser Erfindung auch möglich. In einer Variante kann das System auch als Kreditsystem funktionieren: in diesem Fall wird das Bankkonto des Kunden erst belastet, wenn der Finanzserver 7 einen Transaktionsbeleg empfängt. Der im zweiten Speicherbereich der Karte gespeicherte Geldbetrag nützt in diesem Fall nur als Ausgabelimit.

Die Sicherung der Datenübermittlungen durch Kryptographie wird in zwei verschiedenen Segmenten unterschiedlich unternommen. Zwischen dem Kunden und dem Terminal wird die Kommunikation durch die Luftschnittstelle durch zum Beispiel einen Algorithmus wie DES, TDES, RSA oder ECC sichergestellt. Zwischen Kunden und Finanzserver kommt dagegen das TTP (Trusted Third Party)- Verfahren, oder optional ein PTP-Verfahren (Point-to-Point) zur Anwendung. Die nötigen Elemente sind auf das Identifizierungselement 10 und im TTP-Server 40 integriert. Vorzugsweise werden die Transaktionsbelege mit einem symmetrischen Algorithmus verschlüsselt, wobei der symmetrische Algorithmus einen mit einem asymmetrischen Algorithmus verschlüsselten Session Schlüssel benützt. Vorzugsweise werden ausserdem die übertragenen Transaktionsbelege zertifiziert.

## Patentansprüche

1. Finanztransaktionsverfahren zwischen einem Kunden und einem Terminal (2), wobei der benannte Kunde mit einem Mobilfunktelefon ausgerüstet ist, das in einem Mobilfunknetz (6) angewendet werden kann, wobei das Mobilfunktelefon ein Mobilgerät (1) und ein wegnehmbares Identifizierungsmodul umfasst, in welchem mindestens eine Kundenidentifizierung und ein elektronischer Geldbetrag gespeichert werden können, wobei der benannte Geldbetrag mit Hilfe von gesicherten Nachladebelegen aus einem Dienstzentrum (4) nachgeladen werden kann, welche Nachladebelege mittels digitaler Meldungen über das benannte Mobilfunknetz (6) übertragen werden, **dadurch gekennzeichnet, dass** es folgende Schritte umfasst:
- Übertragung der benannten Kundenidentifizierung an das Terminal (2) über eine kontaktlose Schnittstelle zwischen dem benannten Identifizierungsmodul (10) und dem benannten Terminal (2),
- Prüfung der Erlaubnis des mit der benannten übertragenen Kundenidentifizierung identifizierten Kunden im benannten Terminal, eine Finanztransaktion durchzuführen, wobei diese Prüfung mit Erlaubnisdaten erfolgt, die an das Terminal (2) über ein öffentliches vermitteltes Fernsprechnetz (5) übertragen werden,
- Übertragung eines elektronischen Transaktionsbetrages über die benannte kontaktlose Schnittstelle an das Terminal (2),
- Belastung des gespeicherten Geldbetrags in Abhängigkeit des übertragenen Transaktionbetrages,
- Vorbereitung eines Transaktionsbeleges im Terminal (2), welcher die benannte Kundenidentifizierung, eine Terminalidentifizierung sowie eine Angabe über den benannten Transaktionbetrag enthält,
- Elektronische Signierung des benannten Transaktionsbelegs durch das Terminal (2),
- Übertragung des benannten Transaktionsbeleges an das Dienstzentrum (4) über das benannte öffentliche vermittelte Fernsprechnetz (5),
- Prüfung der elektronischen Signatur des Terminals (2) im benannten Dienstzentrum (4),
- wenn die Signatur einem autorisierten Terminal (2) entspricht, Einzahlung auf einem Konto des Betreibers des Terminals (2).

2. Transaktionsverfahren gemäss dem vorhergehenden Anspruch, **dadurch gekennzeichnet, dass** das benannte Dienstzentrum (4) für jeden Kunden ein Kontrollkonto (41) betreibt, in welchem der Wert des im Identifizierungsmodul gespeicherten Geldbetrages gespeichert ist, wobei dieses Kontrollkonto bei jeder Nachladung des benannten Geldbetrages und beim Empfang von Transaktionsbelegen aktualisiert wird.

3. Transaktionsverfahren gemäss dem vorhergehenden Anspruch, **dadurch gekennzeichnet, dass** die benannten Transaktionsbelege an das benannte Dienstzentrum (4) durch eine Clearing-Einheit (3) geleitet werden.

4. Transaktionsverfahren gemäss einem der vorhergehenden Ansprüche, **dadurch gekennzeichnet, dass** die Daten, die vom benannten Mobilfunktelefon (1,10) an das Terminal (2) über die benannte kontaktlose Schnittstelle übertragen werden, mit einer elektronischen Signatur des Identifizierungsmodules (10) versehen sind.

5. Transaktionsverfahren gemäss dem vorhergehenden Anspruch, **dadurch gekennzeichnet, dass** die benannte elektronische Signatur des Identifizierungsmodules (10) im Terminal (2) überprüft wird

6. Transaktionsverfahren gemäss einem der Ansprüche 4 oder 5, **dadurch gekennzeichnet, dass** die benannte elektronische Signatur des Identifizierungsmodules (10) an das Dienstzentrum (4) weitergeleitet wird und von diesem überprüft wird.

7. Transaktionsverfahren gemäss einem der vorhergehenden Ansprüche, **dadurch gekennzeichnet, dass** die Transaktionsbelege im Batch-Modus über das benannte öffentliche vermittelte Fernsprechnetz (5) an das benannte Dienstzentrum (4) übertragen werden können.

8. Transaktionsverfahren gemäss einem der vorhergehenden Ansprüche, **dadurch gekennzeichnet, dass** die benannten Terminals eine Kunden-Schwarzliste enthalten, die vom benannten Dienstzentrum (4) über das benannte öffentliche vermittelte Fernsprechnetz (5) aktualisiert werden kann, und dass die Transaktion unterbrochen wird, wenn die empfangene Kundenidentifizierung in dieser Schwarzliste enthalten ist.

9. Transaktionsverfahren gemäss einem der vorhergehenden Ansprüche, **dadurch gekennzeichnet, dass** das benannte Dienstzentrum (4) die benannten Identifizierungsmodule (10) mit Hilfe von Kundensperrungsbelegen, die über das benannte Mobilfunknetz (6) übertragen werden, sperren kann.

10. Transaktionsverfahren gemäss einem der vorhergehenden Ansprüche, **dadurch gekennzeichnet, dass** das benannte Dienstzentrum (4) die benannten Terminals (2) mit Hilfe von Terminalsperrungsbelegen, die über das benannte öffentliche vermittelte Fernsprechnetz (5) übertragen werden, sperren kann.

11. Transaktionsverfahren gemäss einem der vorhergehenden Ansprüche, **dadurch gekennzeichnet, dass** das Identifizierungsmodul (10) eine SIM-Karte ist.

12. Transaktionsverfahren gemäss dem Anspruch 2, **dadurch gekennzeichnet, dass** das Identifizierungsmodul ein Transponder (10') ist,
und dass das Mobilgerät (24) im Terminal (2) enthalten ist.

13. Transaktionsverfahren gemäss einem der vorhergehenden Ansprüche, **dadurch gekennzeichnet, dass** das Identifizierungsmodul (10, 10') über eine integrierte Spule ins Identifizierungsmodul (10, 10') mit dem Terminal (2) kommuniziert.

14. Transaktionsverfahren gemäss einem der vorhergehenden Ansprüche, **dadurch gekennzeichnet, dass** das Identifizierungsmodul (10) mit Hilfe einer im Mobilgerät (1) integrierten Spule mit dem Terminal (2) kommuniziert.

15. Transaktionsverfahren gemäss einem der Ansprüche 1 bis 13, **dadurch gekennzeichnet, dass** das Identifizierungsmodul (10) mit Hilfe eines im Mobilgerät (1) integrierten Infrarot-Senders/-Empfängers mit dem Terminal (2) kommuniziert.

16. Transaktionsverfahren gemäss einem der vorhergehenden Ansprüche, **dadurch gekennzeichnet, dass** mindestens gewisse Daten, die über die benannte kontaktlose Schnittstelle (101-20) zwischen dem Terminal (2) und dem Identifizierungsmodul (10, 10') übertragen, verschlüsselt und/oder signiert werden.

17. Transaktionsverfahren gemäss einem der vorhergehenden Ansprüche, **dadurch gekennzeichnet, dass** die benannten Transaktionsbelege verschlüsselt werden.

18. Transaktionsverfahren gemäss dem vorhergehenden Anspruch, **dadurch gekennzeichnet, dass** die benannten Transaktionsbelege während der Übertragung nicht entschlüsselt werden.

19. Transaktionsverfahren gemäss einem der Ansprüche 17 oder 18, **dadurch gekennzeichnet, dass** die Datenelemente (IDUI), die für das Clearing in der benannten Clearing-Einheit (3) benötigt werden, nicht verschlüsselt werden, so dass die Clearing-Einheit die Transaktionsbelege nicht entschlüsseln muss.

20. Transaktionsverfahren gemäss einem der vorhergehenden Ansprüche, **dadurch gekennzeichnet, dass** die Transaktionsbelege (90) mit einem symmetrischen Algorithmus verschlüsselt werden, wobei der symmetrische Algorithmus einen mit einem asymmetrischen Algorithmus verschlüsselten Session Key benützt.

21. Transaktionsverfahren gemäss einem der vorhergehenden Ansprüche, **dadurch gekennzeichnet, dass** die durch das bekannte öffentliche ermittelte Netz (5) übertragenen Transaktionsbelege zertifiziert und/oder signiert werden.

22. Transaktionsverfahren gemäss einem der vorhergehenden Ansprüche, **dadurch gekennzeichnet, dass** der benannte Transaktionsbetrag im Terminal (2) gelesen oder erfasst werden kann.

23. Transaktionsverfahren gemäss einem der vorhergehenden Ansprüche, **dadurch gekennzeichnet, dass** der benannte Transaktionsbetrag im Mobilgerät (1) gelesen oder erfasst werden kann.

24. Transaktionsverfahren gemäss einem der vorhergehenden Ansprüche, **dadurch gekennzeichnet, dass** das Dienstzentrum (4) eine Terminal-Schwarzliste speichert, und dass das Verfahren unterbrochen wird, wenn die empfangene Terminal-Identifizierung (POSID) in der Terminal-Schwarzliste enthalten ist.

25. Transaktionsverfahren gemäss einem der vorhergehenden Ansprüche, **dadurch gekennzeichnet, dass** das Dienstzentrum (4) eine Kundenschwarzliste speichert, und dass das Verfahren unterbrochen wird, wenn die empfangene Kundenidentifizierung (IDUI) in der Kundenschwarzliste enthalten ist.

26. Transaktionsverfahren gemäss einem der vorhergehenden Ansprüche, **dadurch gekennzeichnet, dass** das Identifizierungselement (10) ein Stack mit Daten über bereits durchgeführte Transaktionen enthält,
und dass diese Daten vom Dienstzentrum (4) abgerufen werden können.

## Claims

1. Financial transaction method between a customer and a terminal (2), said customer being equipped with a mobile radio telephone which is able to be used in a mobile radio network (6), the mobile radio telephone comprising a mobile device (1) and a removable identification module, in which at least a customer identification and a monetary amount is able to be stored, said monetary amount being able to be reloaded with the aid of secured reloading documents from a service centre (4), which reloading documents are transmitted by means of digital messages via said mobile radio network (6), **characterised in that** it comprises the following steps:
- transmitting said customer identification to the terminal (2) via a contactless interface between said identification module (10) and said terminal (2),
- checking in the terminal the authorisation of the customer, identified by means of said transmitted customer identification, to carry out a financial transaction, this checking taking place with authorisation data which are transmitted to the terminal (2) via a public switched telephone network (5),
- transmitting an electronic transaction amount to the terminal (2) via said contactless interface,
- charging the stored monetary amount depending upon the transmitted transaction amount,
- preparing in the terminal (2) a transaction document, which contains said customer identification, a terminal identification as well as an indication of said transaction amount,
electronic signing of said transaction document by the terminal (2),
- transmitting said transaction document to the service centre (4) via said public switched telephone network (5),
- checking the electronic signature of the terminal (2) in said service centre (4),
- paying into an account of the operator of the terminal (2), if the signature corresponds to an authorised terminal (2).

2. Transaction method according to the preceding claim, **characterised in that** said service centre (4) operates a control account (41) for each customer in which is stored the value of the monetary amount stored in the identification module, this control account being updated during each reloading of said monetary amount and during reception of transaction documents.

3. Transaction method according to the preceding claim, **characterised in that** said transaction documents are conducted to said service centre (4) by a clearing unit (3).

4. Transaction method according to one of the preceding claims, **characterised in that** the data transmitted from said mobile radio telephone (1, 10) to the terminal (2) via said contactless interface are provided with an electronic signature of the identification module (10).

5. Transaction method according to the preceding claim, **characterised in that** said electronic signature of the identification module (10) is checked in the terminal (2).

6. Transaction method according to one of the claims 4 or 5, **characterised in that** said electronic signature of the identification module (10) is passed on to the service centre (4) and is checked by this service centre.

7. Transaction method according to one of the preceding claims, **characterised in that** the transaction documents are able to be transmitted in batch mode to said service centre (4) via said public switched telephone network (5).

8. Transaction method according to one of the preceding claims, **characterised in that** said terminals contain a customer black list, which is able to be updated by said service centre (4) via said public switched telephone network, and **in that** the transaction is interrupted if the received customer identification is contained in this black list.

9. Transaction method according to one of the preceding claims, **characterised in that** said service centre (4) is able to disable said identification modules (10) with the aid of customer blocking documents transmitted via said mobile radio network (6).

10. Transaction method according to one of the preceding claims, **characterised in that** said service centre (4) is able to disable said terminals (2) with the aid of terminal blocking documents transmitted via said public switched telephone network (5).

11. Transaction method according to one of the preceding claims, **characterised in that** the identification module (10) is a SIM card.

12. Transaction method according to claim 2, **characterised in that** the identification module is a transponder (10'),
and **in that** the mobile device (24) is contained in the terminal (2).

13. Transaction method according to one of the preceding claims, **characterised in that** the identification module (10, 10') communicates with the terminal (2) via an integrated inductance in the identification module (10, 10').

14. Transaction method according to one of the preceding claims, **characterised in that** the identification module (10) communicates with the terminal (2) with the aid of an inductance integrated into the mobile device (1).

15. Transaction method according to one of the claims 1 to 13, **characterised in that** the identification module (10) communicates with the terminal (2) with the aid of an infrared transceiver integrated into the mobile device (1).

16. Transaction method according to one of the preceding claims, **characterised in that** at least certain data, which <sic.> transmitted between the terminal (2) and the identification module (10, 10') via said contactless interface (101-20), are encrypted and/or signed.

17. Transaction method according to one of the preceding claims, **characterised in that** said transaction documents are encrypted.

18. Transaction method according to the preceding claim, **characterised in that** said transaction documents are not decrypted during the transmission.

19. Transaction method according to one of the claims 17 or 18, **characterised in that** the data elements (IDUI), which are needed for the clearing in said dearing unit (3), are not encrypted, so that the clearing unit does not have to decrypt the transaction documents.

20. Transaction method according to one of the preceding claims, **characterised in that** the transaction documents (90) are encrypted with a symmetrical algorithm, the symmetrical algorithm using a session key encrypted with an asymmetrical algorithm.

21. Transaction method according to one of the preceding claims, **characterised in that** the transaction documents transmitted through the known public established <sic. switched> telephone network (5) are certified and/or signed.

22. Transaction method according to one of the preceding claims, **characterised in that** said transaction document is able to be read or captured in the terminal (2).

23. Transaction method according to one of the preceding claims, **characterised in that** said transaction document is able to be read or captured in the mobile device (1).

24. Transaction method according to one of the preceding claims, **characterised in that** the service centre (4) stores a terminal black list, and **in that** the method is interrupted if the received terminal identification (POSID) is contained in the terminal black list.

25. Transaction method according to one of the preceding claims, **characterised in that** the service centre (4) stores a customer black list, and **in that** the method is interrupted if the customer identification (IDUI) is contained in the customer black list.

26. Transaction method according to one of the preceding claims **characterised in that** the identification element (10) contains a stack with data about transactions already carried out,
and **in that** these data are able to be called up by the service centre (4).

## Revendications

1. Procédé de transaction financière entre un client et un terminal (2), ledit client étant équipé d'un téléphone mobile qui peut être utilisé dans un réseau mobile (6), le téléphone mobile comprenant un appareil mobile (1) et un module d'identification amovible dans lequel peuvent être stockées au moins une identification de client et une somme d'argent électronique, ladite somme d'argent pouvant être rechargée à l'aide de justificatifs de recharge depuis un centre de service (4), justificatifs de recharge qui sont transmis au moyen de messages numériques par l'intermédiaire dudit réseau mobile (6), **caractérisé en ce qu'**il comprend les étapes suivantes :
- transmission de ladite identification de client au terminal (2) par une interface sans contact entre ledit module d'identification (10) et ledit terminal (2),
- vérification de la permission du client identifié par la dite identification transmise dans ledit terminal, d'exécuter une transaction financière, cette vérification s'effectuant avec des données d'autorisation qui sont transmises au terminal (2) par un réseau téléphonique publique commuté (5),
- transmission d'un montant transactionnel électronique par ladite interface sans contact au terminal (2),
- prélèvement de la somme d'argent mémorisée en fonction du montant transactionnel transmis,
- préparation d'un justificatif de transaction dans le terminal (2), lequel contient ladite identification de client, une identification de terminal ainsi qu'une indication sur ledit montant transactionnel,
- signature électronique dudit justificatif de transaction par le terminal (2),
- transmission dudit justificatif de transaction au centre de service (4) par ledit réseau téléphonique publique commuté (5),
- vérification de la signature électronique du terminal (2) dans ledit centre de service (4),
- si la signature correspond á un terminal autorisé (2), versement sur un compte de l'exploitant du terminal (2).

2. Procédé de transaction selon la revendication précédente, **caractérisé en ce que** ledit centre de service (4) gère pour chaque client un compte de contrôle (41) dans lequel la valeur de la somme d'argent mémorisée dans le module d'identification est stockée, ce compte de contrôle étant actualisé á chaque recharge de ladite somme d'argent et á la réception de justificatifs de transaction.

3. Procédé de transaction selon l'une des transactions précédentes, **caractérisé en ce que** lesdits justificatifs de transaction sont dirigés au dit centre de service (4) par une unité de compensation (3).

4. Procédé de transaction selon l'une des transactions précédentes, **caractérisé en ce que** les données qui sont transmises par ledit téléphone mobile (1 ,10) au terminal (2) par ladite interface sans contact sont munies d'une signature électronique du module d'identification (10).

5. Procédé de transaction selon la revendication précédente, **caractérisé en ce que** ladite signature électronique du module d'identification (10) est vérifiée dans le terminal (2).

6. Procédé de transaction selon l'une des revendications 4 ou 5, **caractérisé en ce que** ladite signature électronique du module d'identification (10) est transmise au centre de service (4) et est vérifié par ce dernier.

7. Procédé de transaction selon l'une des revendications précédentes, **caractérisé en ce que** les justificatifs de transaction peuvent être transmis en mode batch à travers ledit réseau téléphonique publique commuté (5) audit centre de service (4).

8. Procédé de transaction selon l'une des revendications précédentes, **caractérisé en ce que** lesdits terminaux contiennent une liste noire de clients qui peut être actualisée par ledit centre de service (4) par l'intermédiaire dudit réseau téléphonique publique commuté (5) et **en ce que** la transaction est interrompue si l'identification de client se trouve sur cette liste noire.

9. Procédé de transaction selon l'une des revendications précédentes, **caractérisé en ce que** ledit centre de service (4) peut bloquer lesdits modules d'identification (10) à l'aide de justificatifs de blocage de client qui sont transmis par ledit réseau mobile (6).

10. Procédé de transaction selon l'une des revendications précédentes, **caractérisé en ce que** ledit centre de service (4) peut bloquer lesdits terminaux (2) à l'aide de justificatifs de blocage de terminaux qui sont transmis par ledit réseau téléphonique commuté (5).

11. Procédé de transaction selon l'une des revendications précédentes, **caractérisé en ce que** le module d'identification (10) est une carte SIM.

12. Procédé de transaction selon la revendication 2, **caractérisé en ce que** le module d'identification est un transpondeur (10') et **en ce que** le périphérique mobile (24) est contenu dans le terminal (2).

13. Procédé selon l'une des revendications précédentes, **caractérisé en ce que** le module d'identification (10, 10') communique par une bobine intégrée dans le module d'identification (10, 10') avec le terminal (2).

14. Procédé selon l'une des revendications précédentes, **caractérisé en ce que** le module d'identification (10) communique avec le terminal (2) à l'aide d'une bobine intégrée dans le périphérique mobile (1).

15. Procédé de transaction selon l'une des revendications 1 à 13, **caractérisé en ce que** le module d'identification (10) communique avec le terminal (2) à l'aide d'un émetteur-récepteur infrarouge intégré dans le périphérique mobile (1).

16. Procédé selon l'une des revendications précédentes, **caractérisé en ce qu'**au moins certaines données qui sont transmises par ladite interface sans contact (101-20) entre le terminal (2) et le module d'identification (10, 10') sont codées et/ou signées.

17. Procédé selon l'une des revendications précédentes, **caractérisé en ce que** lesdits justificatifs de transaction sont codés.

18. Procédé selon l'une des revendications précédentes, **caractérisé en ce que** lesdits justificatifs de transaction sont décodés pendant la transmission.

19. Procédé selon l'une des revendications 17 ou 18, **caractérisé en ce que** les éléments de données (IDUI) qui sont requis pour la compensation dans ladite unité de compensation ne sont pas codés de sorte que l'unité de compensation n'a pas besoin de décoder les justificatifs de transaction.

20. Procédé selon l'une des revendications précédentes, **caractérisé en ce que** lesdits justificatifs de transaction sont codés avec un algorithme symétrique, l'algorithme symétrique utilisant une clé de session codée avec un algorithme asymétrique.

21. Procédé selon l'une des revendications précédentes, **caractérisé en ce que** les justificatifs de transaction transmis par ledit réseau téléphonique public commuté (5) sont certifiés et/ou signés.

22. Procédé selon l'une des revendications précédentes, **caractérisé en ce que** ledit montant transactionnel peut être lu ou saisi dans le terminal (2).

23. Procédé selon l'une des revendications précédentes, **caractérisé en ce que** ledit montant transactionnel peut être lu ou saisi dans le périphérique mobile (1).

24. Procédé selon l'une des revendications précédentes, **caractérisé en ce que** le centre de service (4) mémorise une liste noire de terminaux et **en ce que** le procédé est interrompu si l'identification de terminal (POSID) reçue est contenue dans la liste noire de terminaux.

25. Procédé selon l'une des revendications précédentes, **caractérisé en ce que** le centre de service (4) mémorise une liste noire de clients et **en ce que** le procédé est interrompu si l'identification reçue de client (IDUI) est contenue dans la liste noire de clients.

26. Procédé selon l'une des revendications précédentes, **caractérisé en ce que** l'élément d'identification (10) contient un paquet de données sur les transactions déjà effectuées, et **en ce que** ces données peuvent être consultées par le centre de service (4).
